# EUROPEAN PATENT APPLICATION

(11) **EP 1 614 722 A1**
(43) Date of publication of application: **11.01.2006**
(21) Application number: 04254073.2
(22) Date of filing: 07.07.2004
(51) Int. Cl.: C09D 5/00, C08F 30/08, C07F 7/08

(54) **Hydrolysable binders and compositions**

(71) Applicant: SigmaKalon B.V., 1422 AD Uithoorn (NL)
(72) Inventor: Plehiers Mark, 1000 Bruxelles (BE); Gillard Michel, 1348 Louvain-la-Neuve (BE)
(74) Representative: Moy, David

(57) **Abstract**

The present invention provides a hydrolysable binder comprising at least one hydrolysable side chain of formula (I) 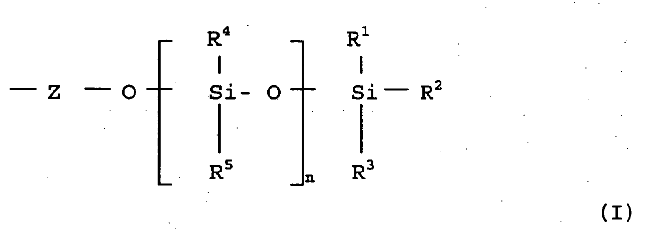 wherein each n independently represents a number of -Si(R⁴) (R⁵)-O- units from 1 to 1000.

Also disclosed are antifouling binders, antifouling binder compositions, antifouling coating compositions, antifouling paint compositions, and the use of a hydrolysable binder in antifouling binder compositions, antifouling coating compositions and antifouling paint compositions.

## Description

The present invention relates to a hydrolysable binder, and more particularly to antifouling binder compositions which require the presence of hydrolysable binders, for example antifouling paint or coating compositions comprising an antifouling binder.

Antifouling paints are widely used to improve the performance of ships by preventing the growth of marine organisms on the sub-marine parts of ships' hulls. Binders containing metals such as tin have been widely used since the 1960's but research has shown that organotin compounds, such as organotin tributyl tin (TBT), cause environmental problems such as deformations in oysters and sex changes in whelks. Finding silyl derived binders as a replacement for such tin-based systems is an important area of research.

A known problem in the art of antifouling paints, particularly those paint compositions comprising a metal oxide, for example such as Cu₂O and/or ZnO, is the storage stability of the composition. In essence, there is a balance which needs to be achieved between paint stability and the self-polishing properties of the paint. In order to be economically and practically viable, it is necessary for the compositions to be stable under normal storage conditions to a certain degree and for a reasonable length of time, but, in order to perform adequately as an antifouling paint composition, the composition must be sufficiently hydrolysable that self-polishing takes place at a reasonable and practical rate.

Thus, the storage stability of antifouling paint compositions containing Cu₂O and/or ZnO and based on binders comprising hydrolysable silyl-based side chains is a known problem in the art.

Several solutions to this problem have been postulated.

For instance, JP 07068467 (to Toshiba) teaches the use of finely-powdered poly(methylsilsesquioxane) to stabilise the antifouling coating compositions.

JP 3261220 (to Nippon Oils & Fats Co.) discloses storage-stable staining-resistant coatings containing tri(organosilyl)ester-substituted polymers and copper.

Nevertheless, to date, all hydrolysable copolymers bearing silyl ester side chains are based on M-type siloxane groups. In this particular system of nomenclature, M-type represents "monofunctional" and refers to siloxane groups having the structural formula, (R)₃Si-O-, where in this system, each R independently represents a hydrocarbon radical. However, the synthesis of M-type siloxane group containing copolymers in which three alkyl groups having two or more carbon atoms are bonded to the silicon atom tends to be troublesome and therefore industrially disadvantageous.

For example, trialkylsilyl (meth) acrylates cannot be obtained via the products of the direct synthesis starting from methyl chloride and metallic silicon, which tends to represent the most efficient synthesis process in organosilicon chemistry. Instead, they tend to be synthesised via a Grignard process, requiring the use of large quantities of Grignard reagents and ether-type solvents. Also within this same nomenclature system, D-type siloxane groups ("difunctional") can be represented by the general structural formula, -O-Si(R)₂-O-, T-type siloxane groups ("trifunctional") by the general structural formula, 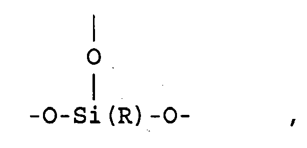 and Q-type siloxane groups ("tetrafunctional" or "quadrifunctional") by the general structural formula 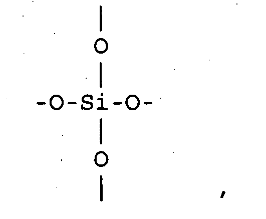 where in each case, R represents a hydrocarbon radical. In other words, M-type siloxane groups contain only one oxygen free valency, whilst D-type, T-type, and Q-type groups, contain two, three and four oxygen free valencies, respectively.

Although (meth)acrylic monomers bearing silyl esters based on D, T and Q siloxane groups have been described in the art, hydrolysable binders and antifouling binder compositions, such as antifouling paint compositions and the like, comprising side chains comprising D, T and Q siloxane groups have not.

Therefore, there remains the need to find alternative and/or improved hydrolysable binders, antifouling binder compositions, and antifouling coating/paint compositions, and this is an object or aim of the present invention.

It is thus an object of the present invention to provide hydrolysable binders, antifouling binder compositions, and antifouling coating/paint compositions, with improved properties.

According to a first aspect of the present invention there is provided a hydrolysable binder comprising at least one hydrolysable side chain of formula (I) 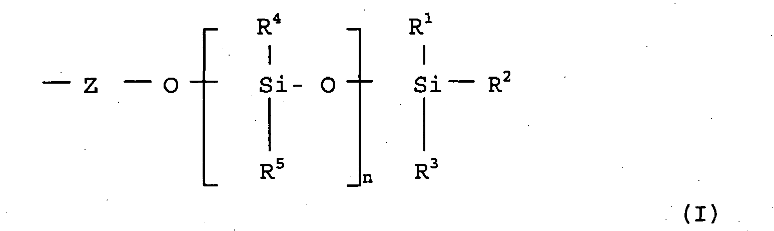 wherein Z is selected from the following: 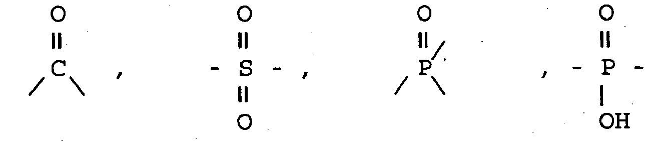 and wherein each R⁴ and R⁵ are independently selected from -O-SiR¹R²R³, or -O- (SiR⁴R⁵O) ₙ-SiR¹R²R³ or may be hydrogen or hydroxyl or may be independently selected from alkyl, aryl, alkoxyl, aryloxyl, alkenyl, alkynyl, aralkyl or aralkyloxyl radicals optionally substituted by one or more substituents independently selected from the group comprising alkyl, alkoxyl, aralkyl, aralkyloxyl, hydroxyl, aryl, aryloxyl, silyl, -O-SiR¹R²R³, -O- (SiR⁴R⁵O)ₙ-SiR¹R²R³, halogen, amino (preferably, tertiary amino) or amino alkyl radicals,
and R¹, R² and R³ each independently represent hydrogen, hydroxyl, alkyl, alkenyl, alkynyl, alkoxyl, -O-SiR¹R²R³, -O- (SiR⁴R⁵O) ₙ-SiR¹R²R³, aryl, aryloxyl, aralkyl or aralkyloxyl radical optionally substituted by one or more substituents independently selected from the group comprising, alkyl, alkoxyl, aralkyl, aralkyoxyl, aryl, aryloxyl, silyl, -O-SiR¹R²R³, -O-(SiR⁴R⁵O)ₙ-SiR¹R²R³, halogen, hydroxyl, amino (preferably tertiary amino) or amino alkyl radicals,
and preferably when R⁴ or R⁵ is the radical -O-(SiR⁴R⁵O)ₙ-SiR¹R²R³, R⁴ and R⁵ within that said radical are not themselves -O-(SiR⁴R⁵O)ₙ-SiR¹R²R³,
and wherein each n independently represents a number of -Si(R⁴) (R⁵)-O- units from 1 to 1000.

According to a second aspect of the present invention there is provided an antifouling binder composition comprising a polymer (P) having at least one hydrolysable side chain of formula (I) as defined herein.

According to a third aspect of the present invention there is provided an antifouling coating composition comprising an antifouling binder as defined herein, and preferably wherein said composition further contains an antifouling effective amount of at least one metal oxide, preferably selected from Cu₂O and ZnO. Suitably, said antifouling coating composition is an antifouling paint composition.

Preferred features of the invention will be apparent from the dependent claims, and the description.

Surprisingly, it has been found that hydrolysable binders comprising a hydrolysable side chain of the present invention typically have improved storage stability properties compared to those of the prior art. Moreover, the side chains of the invention can be prepared from readily-available precursor materials and without the need to perform Grignard reactions or use ether-type solvents. It is therefore also surprisingly found that antifouling binder compositions and antifouling coating compositions comprising a hydrolysable side chain of the present invention typically have improved storage stability properties compared to those of the prior art, and moreover remain stable in the presence of metal oxides, such as Cu₂O or ZnO, but at the same time retain the advantageous self-polishing characteristics associated with antifouling binder compositions and antifouling coating compositions comprising hydrolysable side chains. As such, it is found that the binders and compositions of the present invention show advantageous, useful and/or improved properties compared to binders and compositions of the prior art.

Suitably, as noted above, each n independently represents a number of -Si (R⁴) (R⁵) -O- units, and wherein each n independently represents from 1 to 1000, preferably in the range 1 to 500, more preferably in the range 1 to 50, most preferably in the range 1 to 20, for example, 1, 2, 3, 4 or 5.

Wherein, there is more than one -O- (SiR⁴R⁵O) ₙ-SiR¹R²R³ or -O-SiR¹R²R³ on the same Si atom unit, they may belong to separate side chains or, alternatively, may be incorporated into one or more cyclic ring groups.

Preferably, R⁴ and R⁵ each independently represent an alkyl, an alkoxyl, an aryl, an hydroxyl group, a -O-SiR¹R²R³, or a -O- (SiR⁴R⁵O) ₙ-SiR¹R²R³ group, wherein R¹, R², R³, R⁴ and R⁵ are as defined above and wherein preferably, n = 1-50, more preferably n = 1-10, for example n = 1, 2, 3, 4 or 5.

More preferably, R⁴ and R⁵ are each independently selected from the group comprising an alkyl group, a hydroxyl group, an alkoxyl group, a -O-SiR¹R²R³ group, or a -O- (SiR⁴R⁵O) ₙ-SiR¹R²R³ group, wherein R¹, R², R³, R⁴ and R⁵ each independently represent an alkyl group.

More preferably, R⁴ and R⁵ are each independently selected from the group comprising an alkyl group, a -O- (SiR⁴R⁵O)ₙ₋SiR¹R²R³ group, a -O-SiR¹R²R³ group, as previously defined.

According to an embodiment of the present invention, R¹, R², R³, R⁴ and R⁵ are each independently selected from the group comprising methyl, ethyl, propyl, isopropyl, isobutyl, n-butyl, sec-butyl, t-butyl. Preferably, when they are alkyl groups, R⁴ and R⁵ are methyl or ethyl, more preferably methyl, most preferably, both R⁴ and R⁵ are methyl.

When R¹, R² and R³ are alkyl groups they are preferably independently selected from the group consisting of C₁-C₈ alkyl groups, more preferably C₃-C₄ alkyl groups, most preferably isopropyl and n-butyl. The said alkyl groups may be branched or linear and, optionally, substituted as aforesaid.

When R⁴ or R⁵ are alkoxyl, they are preferably, C₁-C₈ oxyl groups which may be branched or linear, more preferably, C₁-C₄ oxyl groups, most preferably, a methoxyl group.

Preferably, when any one of R¹-R⁵ is selected as -O-SiR¹R²R³ or -O-(SiR⁴R⁵O)ₙ-SiR¹R²R³ the R¹-R⁵ groups attached to the silicon radical in the selected group are not themselves, -O-SiR¹R²R³ or -O- (SiR⁴R⁵O)ₙ-SiR¹R²R³. Preferably, when any one of the R¹-R⁵ groups is selected as -O-SiR¹R²R³ or -O- (SiR⁴R⁵O) ₙ-SiR¹R²R³ and such groups are substituted, the substitution is at the R¹-R⁵ groups and is preferably, by alkyl, alkoxyl, aralkyl, aralkyloxyl, hydroxyl, aryl, aryloxyl, silyl, halogen, amino or amino alkyl, more preferably, alkyl or aryl, most preferably, alkyl.

Preferably, at least one of R⁴ or R⁵ in general formula (I) is selected from -O- (SiR⁴R⁵O) ₙ-SiR¹R²R³ or -O-SiR¹R²R³, preferably at least one of R⁴ or R⁵ is -O-SiR¹R²R³, more preferably, both R⁴ and R⁵ attached to the same Si in general formula (I) are selected from -O-(SiR⁴R⁵O) ₙ-SiR¹R²R³ or -O-SiR¹R²R³, most preferably both R⁴ and R⁵ attached to the same Si in general formula (I) are -O-SiR¹R²R³.

Typically, the hydrolysable binders, antifouling binder compositions, and antifouling coating compositions as described and defined herein, comprise a polymer P having at least one side chain of formula (I) as described and defined herein. Preferably, polymer P is a copolymer of the type including side chains or terminal groups containing -Z-O- groups, such as acrylate polymers etc.

Typically, P comprises an acrylic polymer chain, preferably an alkacrylic polymer chain, more preferably, a (meth)acrylate polymer chain. Accordingly, there may be as many side groups of formula (I) as there are -Z-O-containing side chains in the polymer P and therefore, there is no upper limit on the number of such side chains as it will depend on the number of -Z-O- groups available on polymer P. Preferably, a carbon of the polymer chain is directly attached to the side chain of formula (I) at the Z group.

Preferably, the side chains of formula (I) are present on 1-99% of the residual monomer units in the polymer P, more preferably, 5-40%, most preferably, 10-20% of the monomer units.

Preferably, alternatively defined, the group of formula (I) is present in the polymer P in the range 1-99% w/w, more preferably, 5-75% w/w, most preferably 15-55% w/w.

For the avoidance of doubt, preferably more than one side chain of formula (I) is present on polymer P and in such case each side chain may be the same or different.

As mentioned above, the polymer P may be a copolymer which may be acrylic based or derived from other suitable monomers. The polymer P can be a homo or co-polymer (including terpolymers, etc) having group(s) of formula (I) in the side chains or terminal groups.

More generally, the polymers of the present invention may be derived from any known monomer or polymer having acid groups in the side chains or the terminal groups, more preferably, acid groups of formula -Z(OH)ₓ where X is an integer from 1-3. Preferably, the acid functional monomer is (C₀₋₈ alk) acrylic acid, more preferably, acrylic acid or methacrylic acid, most preferably, methacrylic acid. Similarly, the acid functional polymer is preferably, derived from a (C₀₋₈ alk) acrylic acid, more preferably, acrylic acid or methacrylic acid, most preferably, methacrylic acid.

Preferably, non-formula (I) comonomer residue units are also present in the polymer P in the range of 5-99% w/w of the total monomer units in polymer P, more preferably, 60-95% w/w, most preferably 80-90% w/w. Preferred comonomers are selected from C₁-C₁₂ alkyl (C₀-C₈ alk) acrylate or (C₀₋C₈ alk) acrylic acid, vinyl esters, vinyl amides, vinyl aromatics. The acid groups can also be side chains of other polymers such as polyesters or alkyds. Suitable comonomers are alkacrylic esters such as methyl (meth)acrylate, butyl (meth)acrylate, isobornyl(meth)acrylate, ethyl(meth)acrylate, isobutyl(meth)acrylate; vinyl esters such as vinyl alkanoates, alkenoates, alkynoates or alkarylanoates (e.g., vinyl acetate, vinyl propionate, vinyl butyrate, vinyl benzoate, etc); vinyl amides such as vinyl -NR²³R²⁴, -C(O)NR²⁵R²⁶, amido N containing Het or C(S)NR²⁵R²⁶ wherein R²³ to R²⁶ in such vinyl compounds each independently represent aryl or alkyl (which alkyl group itself may be optionally substituted or terminated as defined below). Examples include vinyl pyrrolidone; vinyl formamide, etc; vinyl aromatics such as styrene, vinyltoluene, alpha -methylstyrene; polyester or alkyd resins; epoxy resins, or mixtures of any of the foregoing comonomers. Especially preferred comonomer unit residues include ethyl acrylate, butyl acrylate and methyl methacrylate or mixtures thereof.

Although (alk) acrylic, more preferably, (meth)acrylic polymers or copolymers are preferred, the polymer having side groups of formula (I) may be derived from any monomer/polymer having acid functionality on the side chains thereof such as itaconic, maleic, fumaric, crotonic, sulfonic, phosphonic acids, acid-functional polyester or alkyd resins, acid-modified epoxy resins and the like or copolymers thereof with any of the non-formula (I) side chain copolymers mentioned above. In the case of the monomers, the polymer of the invention may be obtained from the formula (I) ester of the relevant -Z(OH)ₓ monomer.

Within the third aspect of the present invention, the said antifouling coating composition may preferably further comprise an antifouling effective amount of at least one metal oxide, preferably selected from Cu₂O and ZnO.

Suitably, within said composition, said hydrolysable binder represents between 1-99% by weight, preferably 10-80% by weight, more preferably 15-75% by weight, most preferably 20-60% by weight, for example about 35-45% by weight, e.g. about 40% by weight, of the composition.

As noted hereinbefore, the compositions of the third aspect of the present invention further comprise an antifouling effective amount of at least one metal oxide. Preferably, said metal oxide is selected from the following: Cu₂O, ZnO. More preferably, said compositions further comprise both Cu₂O and ZnO.

Suitably, when Cu₂O is present in said compositions it is present in an antifouling effective amount, preferably in the amount between 1-99% by weight, more preferably in the amount between 10-80% by weight, yet more preferably in the amount between 20-60% by weight, most preferably 35-45% by weight, for example about 40% by weight, of the composition.

Suitably, when ZnO is present in said compositions it is present in an antifouling effective amount, preferably in the amount between 1-99% by weight, more preferably in the amount between 1-40% by weight, yet more preferably in the amount between 1-20% by weight, most preferably 5-15% by weight, for example about 9% by weight, of the composition.

Suitably, both ZnO and Cu₂O can be present within said antifouling coating compositions. Preferably when both ZnO and Cu₂O are present, they are present in an antifouling effective amount, preferably in the amount between 1-99% by weight, more preferably in the amount between 10-80% by weight, yet more preferably in the amount between 20-60% by weight, most preferably 45-55% by weight, for example about 49% by weight, of the composition.

Antifouling coating compositions such as antifouling paint compositions of the third aspect of the present invention may further comprise other ingredients. Suitably further other ingredients include rheological additives (preferably in the amount 0.5 to 10 wt%, more preferably 1.0 to 5.0 wt%, most preferably 1.5 to 3.0 wt%, e.g. about 2.0 wt%, of the composition), and xylene (preferably in the amount 1 to 30 wt%, more preferably 3 to 20 wt%, most preferably 5 to 15 wt%, e.g. at about 9 wt%, of the composition). Other further ingredients can be present, as would be understood by a skilled person in the art, without departing from the scope of the present invention.

As used herein, the term "polymer" refers to the product of a polymerisation reaction, and is inclusive of homopolymers, copolymers, terpolymers, etc.

As used herein, the term "copolymer" refers to polymers formed by the polymerisation reaction of at least two different monomers.

As used herein, the term "independently", "independently selected", "independently represent" or the like indicates that the each radical R so described, can be identical or different. When, in general formula (I) for instance, n > 1, then each R⁴, or each R⁵, within the particular (SiR⁴R⁵O) ₙ group can be the same as or different to the other R⁴ and R⁵ groups, respectively, within the particular (SiR⁴R⁵O) ₙ group. Moreover, if there are more than one (-SiR¹R²R³) groups present, each R¹, each R² and each R³ can be the same as or different to the other R¹, R² and R³ groups present in the overall formula.

The term "alk" or "alkyl", as used herein unless otherwise defined, relates to saturated hydrocarbon radicals being straight, branched, cyclic or polycyclic moieties or combinations thereof and contains 1 to 20 carbon atoms, preferably 1 to 10 carbon atoms, more preferably 1 to 8 carbon atoms, still more preferably 1 to 6 carbon atoms, yet more preferably 1 to 4 carbon atoms. These radicals may be optionally substituted with a halo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or alkyl, and/or be interrupted by one or more oxygen or sulphur atoms, or by silano or dialkylsilcon groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like.

The term "alkenyl", as used herein, relates to hydrocarbon radicals having one or several, preferably up to 4, double bonds, being straight, branched, cyclic or polycyclic moieties or combinations thereof and containing from 2 to 18 carbon atoms, preferably 2 to 10 carbon atoms, more preferably from 2 to 8 carbon atoms, still more preferably 2 to 6 carbon atoms, yet more preferably 2 to 4 carbon atoms. These radicals may be optionally substituted with a hydroxyl, halo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or alkyl, and/or be interrupted by one or more oxygen or sulphur atoms, or by silano or dialkylsilcon groups. Examples of such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like.

The term "alkynyl", as used herein, relates to hydrocarbon radicals having one or several, preferably up to 4, triple bonds, being straight, branched, cyclic or polycyclic moieties or combinations thereof and having from 2 to 18 carbon atoms, preferably 2 to 10 carbon atoms, more preferably from 2 to 8 carbon atoms, still more preferably from 2 to 6 carbon atoms, yet more preferably 2 to 4 carbon atoms. These radicals may be optionally substituted with a hydroxy, halo, cyano, nitro, OR¹⁹, OC(O)R²⁰, C(O)R²¹, C(O)OR²², NR²³R²⁴, C(O)NR²⁵R²⁶, SR²⁷, C(O)SR²¹, C(S)NR²⁵R²⁶, aryl or Het, wherein R¹⁹ to R²⁷ each independently represent hydrogen, aryl or lower alkyl, and/or be interrupted by one or more oxygen or sulphur atoms, or by silano or dialkylsilcon groups. Examples of such radicals may be independently selected from alkynyl radicals include ethynyl, propynyl, propargyl, butynyl, pentynyl, hexynyl and the like.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, halo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or lower alkyl, and/or be interrupted by one or more oxygen or sulphur atoms, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-inethyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like.

The term "aralkyl" as used herein, relates to a group of the formula alkyl-aryl, in which alkyl and aryl have the same meaning as defined above and may be attached to an adjacent radical via the alkyl or aryl part thereof. Examples of such radicals may be independently selected from benzyl, phenethyl, dibenzylmethyl, methylphenylmethyl, 3- (2-naphthyl)-butyl, and the like.

The term "Het", when used herein, includes four-to-twelve-membered, preferably four-to-ten-membered ring systems, which rings contain one or more heteroatoms selected from nitrogen, oxygen, sulphur and mixtures thereof, and which rings may contain one or more double bonds or be nonaromatic, partly aromatic or wholly aromatic in character. The ring systems may be monocyclic, bicyclic or fused. Each "Het" group identified herein is optionally substituted by one or more substituents selected from halo, cyano, nitro, oxo, lower alkyl (which alkyl group may itself be optionally substituted or terminated as defined below) OR¹⁹, OC(O)R²⁰, C(O)R²¹, C(O)OR²², NR²³R²⁴, C(O)NR²⁵R²⁶, SR²⁷, C(O)SR²⁷ or C (S) NR²⁵R²⁶ wherein R¹⁹ to R²⁷ each independently represent hydrogen, aryl or lower alkyl (which alkyl group itself may be optionally substituted or terminated as defined below). The term "Het" thus includes groups such as optionally substituted azetidinyl, pyrrolidinyl, imidazolyl, indolyl, furanyl, oxazolyl, isoxazolyl, oxadiazolyl, thiazolyl, thiadiazolyl, triazolyl, oxatriazolyl, thiatriazolyl, pyridazinyl, morpholinyl, pyrimidinyl, pyrazinyl, quinolinyl, isoquinolinyl, piperidinyl, pyrazolyl and piperazinyl. Substitution at Het may be at a carbon atom of the Het ring or, where appropriate, at one or more of the heteroatoms.

"Het" groups may also be in the form of an N oxide.

For the avoidance of doubt, the reference to alkyl, alkenyl, alkynyl, aryl or aralkyl in composite groups should be interpreted accordingly, for example the reference to alkyl in aminoalkyl or alk in alkoxyl should be interpreted as alk or alkyl above etc.

The term "(alk) acrylate" or "(meth) acrylate" as used herein optionally refers to alkacrylate, methacrylate or the non-alk or non-meth acrylate respectively.

The term "silyl" as used herein includes -SiR¹R²R³ and - (SiR⁴R⁵O)ₙ-SiR¹R²R³ groups wherein R¹-R⁵ are as defined herein. Preferably when the R¹, R², R³, R⁴ or R⁵ group in formula (I) is substituted by such a silyl group at least one or more of R¹, R², R³, R⁴ and R⁵ in the silyl group - SiR¹R²R³ or -(SiR⁴R⁵O)ₙ-SiR¹R²R³ are alkyl or aryl and at least one or more of R¹, R², R³, R⁴ and R⁵ in the said silyl group which are not alkyl or aryl are -O-SiR¹R²R³ or -O-(SiR⁴R⁵O)ₙ-SiR¹R²R³.

In the silyl -SiR¹R²R³ or - (SiR⁴R⁵O) ₙ-SiR¹R²R³ , if R¹ is alkyl or aryl and at least one of R² and R³ is -O-SiR¹R²R³ or -O-(SiR⁴R⁵O) ₙ-SiR¹R²R³ then, preferably, R¹, R², R³, R⁴ and R⁵ in such -O-SiR¹R²R³ or -O- (SiR⁴R⁵O) ₙ-SiR¹R²R³ groups are themselves alkyl or aryl and may be the same or different, more preferably, each independently may be C₁-C₈ alkyl groups.

Preferably, examples of the ethylenically unsaturated radical that may be attached to and form part of the side chain of formula (I) may include but are not limited to (meth)acrylate, itaconate, methyl fumarate, methyl maleate, n-butyl fumarate, n-butyl maleate, amyl fumarate, amyl maleate, and the like and polymers or copolymers thereof, wherein methacrylate or acrylate is herein collectively referred to as a "(meth)acrylate".

In other words, the -Z-O- portion of the side chain of formula (I) is attached to the group R¹⁰-CH=C(R¹¹), and wherein R¹⁰ represents a hydrogen atom, or independently represents alkyl, aryl, aralkyl, alkenyl, alkynyl radical optionally substituted with the same radicals as defined for R¹¹ below or R¹⁰ represents -COOR¹² wherein R¹² represents an hydrogen atom, an alkyl group or - (SiR⁴R⁵⁻O)ₙ- SiR¹R²R³ or -SiR¹R²R³, wherein R¹, R², R³, R⁴ and R⁵ are as already defined; and

R¹¹ represents a hydrogen atom, or an alkyl group, or (-R¹⁴-)ₒ C(O)OR¹³ wherein R¹³ represents an hydrogen atom, -(SiR⁴R⁵O)ₙ-SiR¹R²R³ or -SiR¹R²R³ wherein R¹, R², R³, R⁴, R⁵ are as already defined or an alkyl group; wherein R¹⁴ is independently selected from alkyl, alkenyl, alkynyl, aryl or an aralkyl radical optionally substituted by one or more substituents independently selected from alkyl, alkenyl, alkynyl, aralkyl, aryl, hydroxyl, halogen, amino or amino alkyl radicals; O=0 or 1.

In a preferred embodiment, said ethylenically unsaturated radical is (meth)acrylate, and copolymers or polymers thereof.

Preferred examples of monomers comprising the hydrolysable side chains of formula (I) include:
nonamethyl-1-methacryloyloxy-tetrasiloxane;
heptamethyl-3-methacryloyloxy-trisiloxane (also known as bis(trimethylsiloxy)methylsilyl methacrylate);
tris-trimethylsilyloxy-3-methacryloyloxy-silane (also known as tris(trimethylsiloxy)silyl methacrylate).

The hydrolysable binders of the first aspect of the present invention are found to be particularly useful in coating or paint compositions. More preferably, they are used as comonomer units in the binder of antifouling coating compositions. When used in an antifouling coating composition, they give a film which undergoes neither cracking nor peeling and which shows moderate levels of hydrolysability to dissolve into sea-water constantly at an adequate rate, and which therefore exhibits excellent long-term antifouling properties.

Therefore, according to a yet further aspect the present invention provides the use of a hydrolysable binder as defined and described in the first aspect of the present invention in antifouling binder compositions and antifouling coating compositions, such as antifouling paint compositions. In other words, the invention preferably provides the use of a hydrolysable binder as an antifouling binder, such as for an antifouling coating.

Moreover, and according to a further aspect, the present invention provides a binder for an antifouling coating comprising a polymer comprising at least one hydrolysable side chain of formula (I), as described and defined herein.

The antifouling coating compositions provided as one aspect of the present invention are tin-free coatings and provide an alternative to the known self-polishing coating technology based on hydrolysable tributyl tin polymers. Compared to such organo-tin compounds, the present binders and compositions are less toxic, less polar, more hydrophobic and more stable.

Features and embodiments of each aspect of the present invention are hereby stated to be features and embodiments of each and every other aspect of the present invention, unless otherwise stated or unless mutually exclusive.

The invention will now be described by way of illustration only and with reference to the accompanying illustrative examples.

### Antifouling Paint Formulation Examples

In each of the following examples, a paint formulation was provided with the following constituents:

**Paint Formulation (parts by weight)**

| | | |
|---|---|---|
| 1) | Silyl ester containing polymer (50%) solids | 40.0 |
| 2) | Cu₂O | 40.0 |
| 3) | ZnO | 9.0 |
| 4) | Rheology additive | 2.0 |
| 5) | Xylene | 9.0 |
| | | 100.0 |

### Comparative Example A

A paint formulation was formulated wherein the silyl ester containing polymer was a tributylsilyl methacrylate (TBSiMA - an example of an M-type monomer unit) [CAS No. 22414-62-6]-methyl methacrylate-butyl acrylate copolymer.

The copolymer was prepared as follows.

1066.2 g of xylene was added to a 21 4-necks flask and kept under nitrogen. The four necks of the flask were equipped with stirrings means, a reflux condenser, a thermometer for temperature control of the reaction, and means for addition of the monomers.
A premix was prepared in a separate vessel, containing:
- 990.0 g of methyl methacrylate
- 198.0 g of butyl acrylate
- 792.0 g of Tributylsilyl methacrylate)
- 162.0 g of xylene
- 39.6 g (=2% on total monomer weight) of t-Butyl peroxy-2-ethyl hexanoate (TBPEH sold under the name Trigonox 21-S by Akzo-Nobel).
The premix was added drop by drop to the reaction vessel (total time = 3 hours) whilst the temperature was maintained at 90°C. Thirty minutes after the end of the addition of the premix, five post-additions of 0.1% Trigonox 21-S were made at intervals of 45 minutes. 15 minutes after the last post-addition, the temperature was increased up to 120°C during one hour. After cooling the binder solution was thinned with 391.8 g of xylene to a viscosity of 12 dPa.s and a solids of 54.3 %. The binder had a MW of 41000 Da, and a drawdown made of the polymer solution on glass yielded a clear dry film.

### Comparative Example B

A paint formulation was formulated wherein the silyl ester containing polymer was a trisisopropylacrylate (TiPSA - a further example of an M-type monomer unit) [CAS No. 157859-20-6]-based copolymer.

The copolymer was prepared as follows.

266.5 g of xylene was added to a 21 4-necks flask and kept under nitrogen. The four necks of the flask were equipped with stirrings means, a reflux condenser, a thermometer for temperature control of the reaction, and means for addition of the monomers.
A premix was prepared in a separate vessel, containing:
- 188.1 g of methyl methacrylate
- 24.8 g of methoxyethyl acrylate
- 282.2 g of Tri-isopropylsilyl acrylate)
- 40.5 g of xylene
- 5.9 g (=2% on total monomer weight) of t-Butyl peroxy-2-ethyl hexanoate (TBPEH sold under the name Trigonox 21-S by Akzo-Nobel).

The premix was added drop by drop to the reaction vessel (total time = 3 hours) whilst the temperature was maintained at 90°C. Thirty minutes after the end of the addition of the premix, five post-additions of 0.1% Trigonox 21-S were made at intervals of 45 minutes. 15 minutes after the last post-addition, the temperature was increased up to 120°C during one hour. After cooling the binder solution was thinned with 98.0 g of xylene to a viscosity of 5.6 dPa.s and a solids of 55.6 %. The binder had a MW of 36000 Da, and a drawdown made of the polymer solution on glass yielded a clear dry film.

### Examples According to the Invention

### Example 1 (Polymer C)

A paint formulation was formulated wherein the silyl ester containing polymer was a copolymer of nonamethyl-1-methacryloyloxy-tetrasiloxane (an example of a D-type monomer unit) [CAS No. 640772-61-8] (2-propenoic acid, 2-methyl-, nonamethyl-tetrasiloxanyl ester, prepared as per WO-A-04/007591) with methyl methacrylate and butyl acrylate. This is an example of a D-type monomer being used within an antifouling paint composition or formulation.

The copolymer was prepared as follows.

266.5 g of xylene was added to a 21 4-necks flask and kept under nitrogen. The four necks of the flask were equipped with stirrings means, a reflux condenser, a thermometer for temperature control of the reaction, and means for addition of the monomers.
A premix was prepared in a separate vessel, containing:
- 247.5 g of methyl methacrylate
- 49.5 g of butyl acrylate
- 198.0 g of nonamethyl-1-methacryloyloxy-tetrasiloxane (as prepared in W02004007591)
- 40.5 g of xylene
- 9.9 g (=2% on total monomer weight) of t-Butyl peroxy-2-ethyl hexanoate (TBPEH sold under the name Trigonox 21-S by Akzo-Nobel).

The premix was added drop by drop to the reaction vessel (total time = 3 hours) whilst the temperature was maintained at 90°C. Thirty minutes after the end of the addition of the premix, five post-additions of 0.1% Trigonox 21-S were made at intervals of 45 minutes. 15 minutes after the last post-addition, the temperature was increased up to 120°C during one hour. After cooling the binder solution was thinned with 98.0 g of xylene to a viscosity of 9.2 dPa.s and a solids of 52.6 %. The binder had a MW of 29000 Da, and a drawdown made of the polymer solution on glass yielded a clear dry film.

### Example 2 (Polymer D)

A paint formulation was formulated wherein the silyl ester containing polymer was a copolymer of bis(trimethylsiloxy)methylsilyl methacrylate (an example of a T-type monomer unit) [CAS No. 121836-13-3] (prepared as per Embodiment 2 of JP63-253090) with methyl methacrylate and butyl acrylate. This is an example of a T-type monomer being used within an antifouling paint composition or formulation.

The copolymer was prepared as follows.

148.1 g of xylene was added to a 21 4-necks flask and kept under nitrogen. The four necks of the flask were equipped with stirrings means, a reflux condenser, a thermometer for temperature control of the reaction, and means for addition of the monomers.
A premix was prepared in a separate vessel, containing:
- 137.5 g of methyl methacrylate
- 27.5 g of butyl acrylate
- 110.0 g of heptamethyl-3-methacryloyloxy-trisiloxane (as prepared in Embodiment 2 of JP63-253090)
- 22.5 g of xylene
- 5.5 g (=2% on total monomer weight) of t-Butyl peroxy-2-ethyl hexanoate (TBPEH sold under the name Trigonox 21-S by Akzo-Nobel).

The premix was added drop by drop to the reaction vessel (total time = 3 hours) whilst the temperature was maintained at 90°C. Thirty minutes after the end of the addition of the premix, five post-additions of 0.1% Trigonox 21-S were made at intervals of 45 minutes. 15 minutes after the last post-addition, the temperature was increased up to 120°C during one hour. After cooling the binder solution was thinned with 54.4 g of xylene to a viscosity of 30 dPa.s and a solids of 54.8 %. The binder had a MW of 29000 Da, and a drawdown made of the polymer solution on glass yielded a clear dry film.

### Example 3 (Polymer E)

A paint formulation was formulated wherein the silyl ester containing polymer was a copolymer of tris(trimethylsiloxy)silyl methacrylate (an example of a Q-type monomer unit) [CAS No. 121836-11-1] (prepared as per Embodiment 1 of JP 63-253090) with methyl methacrylate and butyl acrylate. This is an example of a Q-type monomer being used within an antifouling paint composition or formulation.

The copolymer was prepared as follows.

148.1 g of xylene was added to a 21 4-necks flask and kept under nitrogen. The four necks of the flask were equipped with stirrings means, a reflux condenser, a thermometer for temperature control of the reaction, and means for addition of the monomers.
A premix was prepared in a separate vessel, containing:
- 171.8 g of methyl methacrylate
- 34.3 g of butyl acrylate
- 137.6 g of tris-trimethylsilyloxy-3-methacryloyloxy-silane (as prepared in Embodiment 1 of JP63-253090)
- 28.1 g of xylene
- 6.8 g (=2% on total monomer weight) of t-Butyl peroxy-2-ethyl hexanoate (TBPEH sold under the name Trigonox 21-S by Akzo-Nobel).
The premix was added drop by drop to the reaction vessel (total time = 3 hours) whilst the temperature was maintained at 90°C. Thirty minutes after the end of the addition of the premix, five post-additions of 0.1% Trigonox 21-S were made at intervals of 45 minutes. 15 minutes after the last post-addition, the temperature was increased up to 120°C during one hour. After cooling the binder solution was thinned with 81.6 g of xylene to a viscosity of 25 dPa.s and a solids of 53.4 %. The binder had a MW of 25000 Da, and a drawdown made of the polymer solution on glass yielded a clear dry film.

### Paint Properties

The paint compositions/formulations were tested for stability after one week of being held at 50°C and for levels of hydrolysis at a pH value of 12.7, i.e. strongly alkaline conditions.

The results are shown in Table 1 below.

**Table 1 Paint Properties**

| | | |
|---|---|---|
| Paint based on Polymer | Stability after 1 week at 50°C | Hydrolysis at pH = 12.7 |
| A (comparative ex. A) | Bad | Yes |
| B (comparative ex. B) | Moderate | No |
| C (Ex 1) | Good | Yes |
| D (Ex 2) | Good | Yes |
| E (Ex 3) | Good | Yes |

As will be noted from Table 1 above, the paint formulations based on the present invention (i.e. those based on polymers C, D and E) show both good stability and hydrolysis properties, under the conditions tested, as required for viable and useful antifouling coating compositions. The comparative examples (i.e. those based on polymers A and B) show moderate (polymer B) or poor (polymer A) stability under these conditions, and in the case of paint formulation B, also poor hydrolysis. In other words, neither A nor B show the required combination of properties, i.e. good stability and hydrolysis.

The above descriptions and examples are intended to provide a broad and generic teaching and enablement of a generic invention. The examples should not be read as imposing limits upon the general and generic terms used to describe the practice of the present invention. Generic and specific embodiments are described within the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A hydrolysable binder comprising at least one hydrolysable side chain of formula (I) 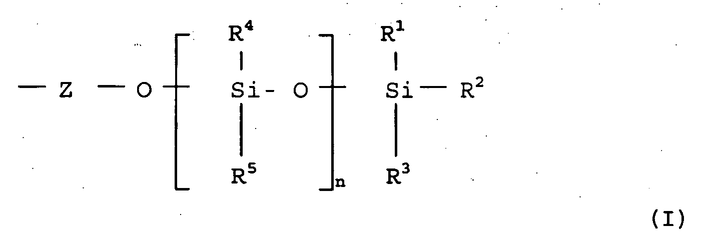 wherein Z is selected from the following: 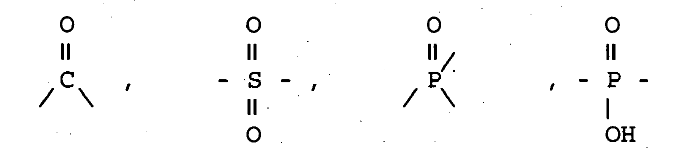 and wherein each R⁴ and R⁵ are independently selected from -O-SiR¹R²R³, or -O-(SiR⁴R⁵O)ₙ-SiR¹R²R³ or may be hydrogen or hydroxyl or may be independently selected from alkyl, aryl, alkoxyl, aryloxyl, alkenyl, alkynyl, aralkyl or aralkyloxyl radicals optionally substituted by one or more substituents independently selected from the group comprising alkyl, alkoxyl, aralkyl, aralkyloxyl, hydroxyl, aryl, aryloxyl, silyl, -O-SiR¹R²R³, -O- (SiR⁴R⁵O)ₙ-SiR¹R²R³, halogen, amino (preferably, tertiary amino) or amino alkyl radicals,
and R¹, R² and R³ each independently represent hydrogen, hydroxyl, alkyl, alkenyl, alkynyl, alkoxyl, -O-SiR¹R²R³, -O-(SiR⁴R⁵O)ₙ-SiR¹R²R³, aryl, aryloxyl, aralkyl or aralkyloxyl radical optionally substituted by one or more substituents independently selected from the group comprising alkyl, alkoxyl, aralkyl, aralkyoxyl, aryl, aryloxyl, silyl, -O-SiR¹R²R³, -O- (SiR⁴R⁵O) ₙ-SiR¹R²R³, halogen, hydroxyl, amino (preferably tertiary amino) or amino alkyl radicals,
and wherein each n independently represents a number of -Si (R⁴) (R⁵) -O- units from 1 to 1000.

2. A hydrolysable binder as claimed in claim 1 wherein when R⁴ or R⁵ is the radical -O- (SiR⁴R⁵O)ₙ-SiR¹R²R³, R⁴ and R⁵ within that said radical are not themselves -O-(SiR⁴R⁵O)ₙ-SiR¹R²R³.

3. A hydrolysable binder as claimed in either of claims 1 and 2 wherein each n independently represents a number of -Si (R⁴) (R⁵) -O- units from 1 to 50.

4. A hydrolysable binder as claimed in claim 3 wherein each n represents 1, 2, 3, 4 or 5.

5. A hydrolysable binder as claimed in any preceding claim wherein R⁴ and R⁵ each independently represent an alkyl, an alkoxyl, an aryl, an hydroxyl group, a -O-SiR¹R²R³, or a -O- (SiR⁴R⁵O)ₙ-SiR¹R²R³ group.

6. A hydrolysable binder as claimed in any preceding claim wherein R⁴ and R⁵ are each independently selected from the group comprising an alkyl group, a -O-(SiR⁴R⁵O)ₙ₋SiR¹R²R³ group, a -O-SiR¹R²R³ group.

7. A hydrolysable binder as claimed in any preceding claim wherein at least one of R⁴ or R⁵ in general formula (I) is selected from -O- (SiR⁴R⁵O) ₙ-SiR¹R²R³ or -O-SiR¹R²R³.

8. A hydrolysable binder as claimed in claim 7 wherein at least one of R⁴ or R⁵ is -O-SiR¹R²R³.

9. A hydrolysable binder as claimed in any preceding claim wherein both R⁴ and R⁵ attached to the same Si in general formula (I) are selected from -O-(SiR⁴R⁵O)ₙ-SiR¹R²R³ or -O-SiR¹R²R³.

10. A hydrolysable binder as claimed in claim 9 wherein both R⁴ and R⁵ attached to the same Si in general formula (I) are -O-SiR¹R²R³.

11. An antifouling binder composition comprising a polymer (P) having at least one hydrolysable side chain of formula (I) as defined in any preceding claim.

12. An antifouling binder composition as claimed in claim 11 wherein P comprises an acrylic polymer chain.

13. An antifouling binder composition as claimed in either of claims 11 and 12 wherein P comprises a (meth)acrylate polymer chain.

14. An antifouling binder composition as claimed in any of claims 11 to 13 wherein the side chains of formula (I) are present on 1-99% of the residual monomer units in the polymer P.

15. An antifouling binder composition as claimed in claim 14 wherein the side chains of formula (I) are present on 10-20% of the residual monomer units in the polymer P.

16. An antifouling binder composition as claimed in any of claims 11 to 13 wherein the group of formula (I) is present in the polymer P in the range of 1-99% w/w.

17. An antifouling binder composition as claimed in claim 16 wherein the group of formula (I) is present in the polymer P in the range of 15-55% w/w.

18. An antifouling coating composition comprising an antifouling binder as claimed in any of claims 11 to 17.

19. An antifouling coating composition according to claim 18 wherein the coating composition further contains an antifouling effective amount of at least one metal oxide, preferably selected from Cu₂O and ZnO.

20. An antifouling coating composition according to claim 19 wherein the coating composition further contains both Cu₂O and ZnO.

21. An antifouling coating composition according to any of claims 18 to 20 wherein said antifouling binder represents 10-80% by weight of the said composition.

22. An antifouling coating composition according to any of claims 19 to 21 wherein Cu₂O is present in the amount between 20-60% by weight of said composition.

23. An antifouling coating composition according to any of claims 19 to 22 wherein ZnO is present in the amount between 1-20% by weight of said composition.

24. An antifouling coating composition according to claim 20 wherein Cu₂O and ZnO are present in the total amount between 20-60% by weight of said composition.

25. An antifouling coating composition according to any of claims 18 to 24 wherein said coating composition is an antifouling paint composition.

26. An antifouling coating composition according to claim 25 further comprising at least one rheological additive and xylene.

27. A hydrolysable binder, an antifouling binder, an antifouling binder composition, and an antifouling coating composition, substantially as described herein.
